# EUROPEAN PATENT APPLICATION

(11) **EP 4 451 435 A2**
(43) Date of publication of application: **23.10.2024**
(21) Application number: 24171295.9
(22) Date of filing: 19.04.2024
(51) Int. Cl.: H01M 50/107, H01M 50/152, H01M 50/169, H01M 50/342

(54) **SECONDARY BATTERY**

(30) Priority: 21.04.2023 KR 20230052502
(71) Applicant: Samsung SDI Co., Ltd., Yongin-si, Gyeonggi-do 17084 (KR)
(72) Inventor: CHOI, Woo Hyuk, 17084 Yongin-si (KR); KIM, Joung Ku, 17084 Yongin-si (KR); YANG, Jun Ho, 17084 Yongin-si (KR); KWON, Jun Hwan, 17084 Yongin-si (KR); PARK, Hyun Suk, 17084 Yongin-si (KR); LEE, Tae Yoon, 17084 Yongin-si (KR)
(74) Representative: Marks & Clerk LLP

(57) **Abstract**

Embodiments of the present disclosure relate to a cylindrical secondary battery that facilitates gas discharge by causing a bent shape of a cap plate to be deformed and broken if a temperature of a cell increases, such as due to an event. In one or more embodiments, a secondary battery includes: an electrode assembly; a case including a top end open to accommodate the electrode assembly; and a cap plate coupled to the top end of the case, and the cap plate includes a central region, an edge region, a bent portion between the central region and the edge region, and a vent portion including a notch configured to be broken by a certain pressure.

## Description

### BACKGROUND

### 1. Field

Aspects of embodiments of the present disclosure relate to a secondary battery.

### 2. Description of the Related Art

Unlike a primary battery that cannot be charged, a secondary battery is a battery that can be charged and discharged. Low-capacity batteries may be used in portable small electronic devices, such as smartphones, feature phones, tablet computers, notebook computers, digital cameras, or camcorders, and large-capacity batteries are widely used as power sources, such as for driving motors in hybrid vehicles, electric vehicles, or power storage devices.

Secondary batteries may be classified into cylindrical, prismatic, and pouch-type secondary batteries in terms of shape. A cylindrical secondary battery generally includes an electrode assembly, a can, a cap assembly, etc., and has a structure in which, after an electrode assembly is inserted into a can, a beading part is formed, a cap assembly is installed thereon, and a crimping part is then formed to fix the electrode assembly and the cap assembly in the can.

In addition, a cylindrical secondary battery generally has a structure in which a can having a negative polarity and a cap assembly having a positive polarity are insulated from each other by means of a gasket. In the case of a battery module using a plurality of connected cylindrical secondary batteries, bus bars are connected to upper and lower portions of the secondary batteries, respectively, and there may be problems in that a structure is complicated and a process (manufacture) time is increased.

The above information disclosed in this Background section is provided for enhancement of understanding of the background of the invention and, therefore, it may contain information that does not constitute prior art.

### SUMMARY

According to an aspect of embodiments of the present disclosure, a secondary battery capable of implementing a vent function by using shape deformation of a cap plate is provided.

According to one or more embodiments of the present disclosure, a secondary battery includes: an electrode assembly; a case including a top end open to accommodate the electrode assembly; and a cap plate coupled to the top end of the case, and the cap plate includes a central region, an edge region, a bent portion between the central region and the edge region, and a vent portion including a notch configured to be broken by a certain pressure.

The vent portion may include: a first bent portion concavely recessed from the cap plate toward the inside of the case; and a second bent portion convexly protruding from the cap plate toward an outside of the case.

The notch may be formed at a bent portion of the first bent portion.

The notch may be formed on an outer surface of the cap plate.

The notch may be shaped as a circular ring continuously arranged along a circumference of the cap plate.

The notch may be shaped as a C-shape.

The notch may be shaped as an ellipse continuously arranged along a circumference of the cap plate.

The notch may have a certain depth.

A thickness of the cap plate at a portion where the notch is formed may be 0.05 mm to 0.20 mm.

The depth of the notch may be asymmetrical in a tapered form, decreasing from a first side to a second side.

The cap plate may have a thickness of 0.05 to 0.10 mm at a portion where the notch has a largest depth, and may have a thickness of 0.15 to 0.20 mm at a portion where the notch has a smallest depth.

The notch may be shaped of an ellipse, and a depth of the notch in a region having a small radius of curvature of the ellipse may be smaller than a depth of the notch in a region having a relatively large radius of curvature of the ellipse.

The first bent portion may be recessed toward the inside of the case, compared to the central region and the edge region of the cap plate.

The second bent portion may protrude outward from the case, compared to the central region of the cap plate.

A height of the second bent portion protruding outward from the case may be equal to or smaller than a height of the edge region of the cap plate.

The height at which the second bent portion protrudes or the first bent portion is recessed may be 1 to 2.5 times greater than a thickness of the cap plate.

The first bent portion may have a bending angle of 15 to 25 degrees.

The secondary battery may be a cylindrical secondary battery.

At least some of the above and other features of the invention are set out in the claims.

### BRIEF DESCRIPTION OF DRAWINGS

FIG. 1 is a cross-sectional view of a secondary battery according to an embodiment of the present disclosure.
FIG. 2 is an enlarged view of region II of FIG. 1.
FIG. 3 is a cross-sectional view of a cap plate for explaining a process of manufacturing a cap plate, according to an embodiment of the present disclosure.
FIG. 4 is a cross-sectional view of a cap plate for explaining shape deformation of the cap plate, according to an embodiment of the present disclosure.
FIG. 5 is a cross-sectional view of a cap plate showing a broken state of the cap plate, according to an embodiment of the present disclosure.
FIG. 6 is a plan view of a cap plate in the cylindrical secondary battery of FIG. 1, according to an embodiment of the present disclosure.
FIG. 7 is a plan view of a cap plate in the cylindrical secondary battery of FIG. 1, according to another embodiment of the present disclosure.
FIG. 8 is a plan view of a cap plate in the cylindrical secondary battery of FIG. 1, according to another embodiment of the present disclosure.
FIG. 9 is a cross-sectional view of a cap plate after a notch process, for comparison of notch depths between part A (A') and part B (B') in the cylindrical secondary battery of FIGS. 6-8, according to an embodiment of the present disclosure.
FIG. 10 is a cross-sectional view of a cap plate after a notch process, for comparison of notch depths between part A (A') and part B (B') in the cylindrical secondary battery of FIGS. 6-8, according to another embodiment of the present disclosure.

### DETAILED DESCRIPTION

Some example embodiments of the present disclosure are described herein to more completely explain the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s), referring to the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" may encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, a secondary battery (e.g., a cylindrical secondary battery) 100 according to an embodiment of the present disclosure will be described in further detail with reference to the accompanying drawings.

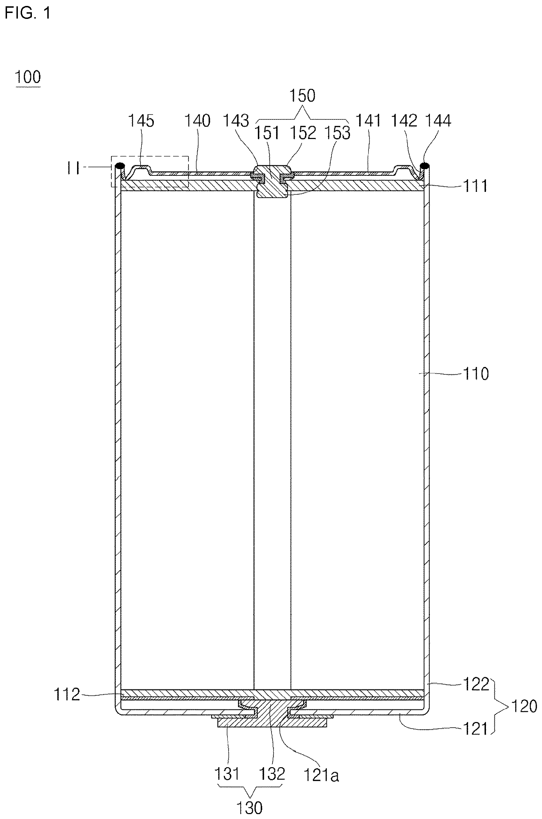

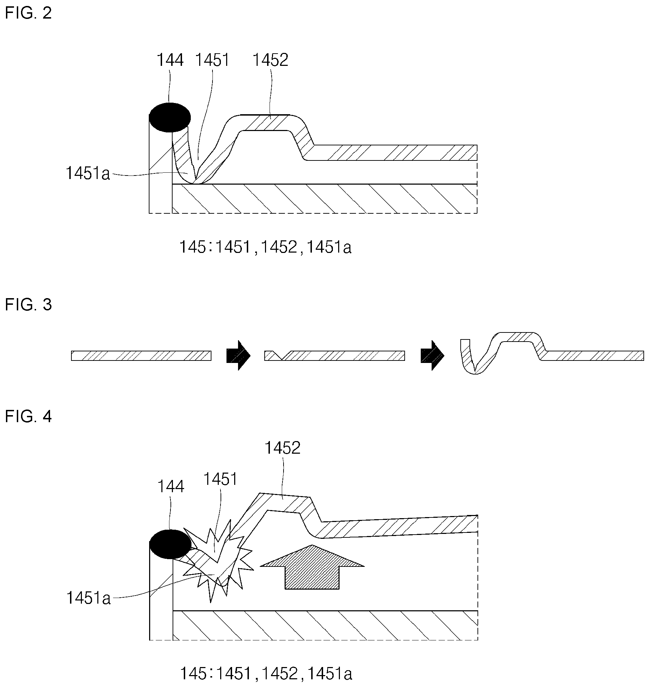

Referring to FIGS. 1 and 2, the secondary battery 100 according to an embodiment of the present disclosure may include an electrode assembly 110, a case (e.g., a can) 120, a terminal 130, a cap plate 140, and a plug 150.

The electrode assembly 110 may include a first electrode plate, a second electrode plate, and a separator.

The first electrode plate may be one of a negative electrode plate and a positive electrode plate. For example, when the first electrode plate is a negative electrode plate, the first electrode plate may include a coating portion (negative electrode coating portion) in which an active material (negative electrode active material) is coated on a conductive metal thin plate, for example, a current collector plate made of copper or nickel foil or mesh, and a non-coating portion (negative electrode non-coating portion) 111 that is not coated with the negative electrode active material. The negative electrode active material may be made of, for example, a carbon-based material, Si, Sn, tin oxide, tin alloy composite, transition metal oxide, lithium metal nitrite, or metal oxide.

The second electrode plate may be the other of a negative electrode plate and a positive electrode plate. For example, when the second electrode plate is a positive electrode plate, the second electrode plate may include may include a coating portion (positive electrode coating portion) in which an active material (positive electrode active material) is coated on a conductive metal thin plate, for example, a current collector plate made of aluminum foil or mesh, and a non-coating portion (positive electrode non-coating portion) 112 that is not coated with the positive electrode active material. The positive electrode active material may be made of, for example, a chalcogenide compound, for example, a complex metal oxide such as LiCoO₂, LiMn₂O₄, LiNiO₂, or LiNiMnO₂.

The separator may be interposed between the first electrode plate and the second electrode plate to prevent or substantially prevent a short circuit between the first electrode plate and the second electrode plate. The separator may be made of, for example, polyethylene, polypropylene, or a porous copolymer of polyethylene and polypropylene.

The electrode assembly 110 may be formed by stacking a first electrode plate, a separator, and a second electrode plate in that order, such that the non-coating portion 111 of the first electrode plate is aligned on a side (e.g., an upper side in the drawing), and the non-coating portion 112 of the second electrode plate is aligned on an opposite side (e.g., a lower side in the drawing), followed by winding so as to have a hollow center.

In an embodiment, the case 120 may be formed in a cylindrical shape. In an embodiment, the case 120 may include a bottom 121 formed in the shape of a disk and a side surface 122 extending upward from an edge of the bottom 121. In an embodiment, the case 120 has a top end open, and the electrode assembly 110 is inserted into an inside of the case 120 through the top end of the case 120, and the top end of the case 120 is then closed by the cap plate 140.

The case 120 may be formed such that a hole 121a for installation of the terminal 130 penetrates the center of the bottom 121. That is, the bottom 121 may be coupled by inserting the terminal 130 into the hole 121a. In an embodiment, in the case 120, the bottom 121 and the side surface 122 may be integrally formed, and may be made of, for example, steel, a steel alloy, aluminum, or an aluminum alloy.

The terminal 130 may be installed in the hole 121a of the bottom 121 of the case 120 and electrically connected to the non-coating portion 112 of the second electrode plate of the electrode assembly 110. In an embodiment, the terminal 130 may be a positive electrode terminal. The terminal 130 and the case 120 may have different polarities.

In the terminal 130, a diameter of a portion exposed to the lower portion of the case 120 and a diameter located inside the case 120 may be larger than a diameter located in the hole 121a.

The terminal 130 may include a head 131, which is a portion exposed to the lower portion of the case 120, and a fastening part 132, which is a portion located inside the case 120 and facing the electrode assembly 110. The terminal 130 may be coupled to the hole 121a of the case 120 from the outside to the inside. Here, the head 131 may be located outside the case 120.

In an embodiment, the fastening part 132 may be installed by riveting and may be referred to as a rivet terminal. That is, the fastening part 132 may be compressively deformed (e.g., compression-molded) by riveting, and compressed in a state in which an insulating member is interposed therebetween on the bottom 121. Therefore, the insulating member may be installed between the case 120 and the terminal 130 to be electrically insulated from each other and sealed.

In an embodiment, the fastening part 132 may have a wider diameter going from the hole 121a toward the inside of the case 120. In addition, the head 131 may be in close contact with the lower portion of the bottom 121 in a state in which the insulating member is interposed therebetween. The fastening part 132 may come into close contact with the non-coating portion 112 of the second electrode plate of the electrode assembly 110.

The cap plate 140 may be formed in the shape of a disk corresponding to the top end of the case 120 and may be coupled to the top end of the case 120 to seal the case 120. An upper surface of the cap plate 140 may be exposed to the outside. The cap plate 140 may include a central region 141 positioned above the non-coating portion 111 and an edge region 142 coupled to the case 120. The central region 141 may protrude more toward an inside of the case 120 than the edge region 142. That is, the cap plate 140 may be configured such that the edge region 142 is positioned higher than the central region 141.

In an embodiment, an injection port 143 for injecting an electrolyte into the case 120 may be provided in the central region 141 of the cap plate 140. That is, to inject an electrolyte into the case 120 after coupling the cap plate 140 to the case 120, the injection port 143 may be formed in the central region 141 of the cap plate 140.

A welding part 144 coupled to the case 120 and fixing the cap plate 140 to the case 120 may be provided in the edge region 142 of the cap plate 140. That is, the cap plate 140 may be laser welded to the case 120 at the edge region 142; however, embodiments of the present disclosure are not limited thereto. In an embodiment, the cap plate 140 and the case 120 may be coupled by means of a coupling groove. For example, the coupling groove may be formed on an inner surface of the top of the case 120. The cap plate 140 may include a protrusion part protruding upward from the edge region 142 and may be coupled to the coupling groove of the case 120. In an embodiment, the protrusion part may be laser welded to the case 120 to form the welding part 144. In some examples, the cap plate 140 may be coupled to the coupling groove in an interference fit manner. In this case, a separate welding process may not be required between the cap plate 140 and the case 120.

In some cases, when the cap plate 140 is coupled to the case 120, the cap plate 140 may be electrically separated from the case 120 by being coupled in a state in which the insulating member is interposed therebetween. In this case, since the cap plate 140 is not electrically connected to the positive electrode or the negative electrode, there may be no separate electrical polarity.

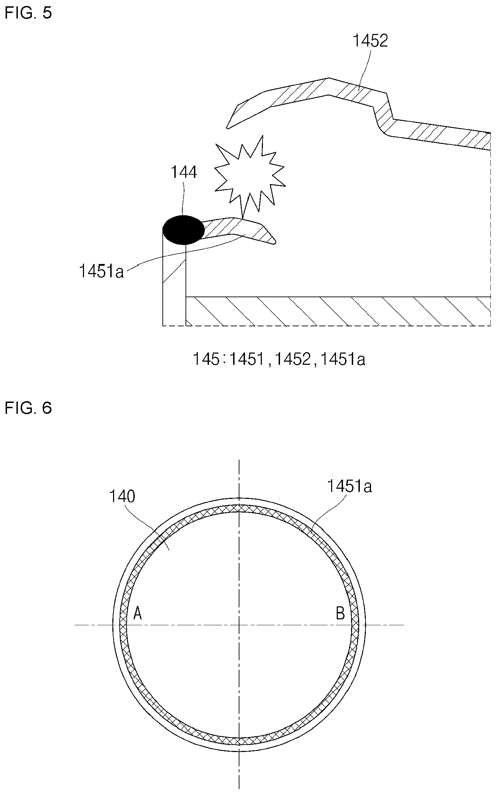

FIG. 3 is a cross-sectional view of a cap plate for explaining a process of manufacturing a cap plate according to an embodiment of the present disclosure; FIG. 4 is a cross-sectional view of a cap plate for explaining shape deformation of the cap plate according to an embodiment of the present disclosure; and FIG. 5 is a cross-sectional view of a cap plate showing a broken state of the cap plate, according to an embodiment of the present disclosure. Herein, a configuration of a vent portion 145 of the cap plate 140 will be described in further detail with reference to FIGS. 3 to 5.

The cap plate 140 may include a vent portion 145 between the central region 141 and the edge region 142 to be broken by a certain pressure (e.g., a set pressure). That is, the vent portion 145 may be formed adjacent to or spaced apart from the welding part 144. A notch 1451a is formed in the vent portion 145 from the upper surface of the cap plate 140 toward the lower portion and may be broken when the internal pressure increases. That is, the notch 1451a may be formed on the outer surface of the cap plate 140.

The vent portion 145 may be bent so as to be easily broken due to a shape deformation of the cap plate 140 when the internal pressure increases. The vent portion 145 may include a first bent portion 1451 formed by being concavely depressed from the cap plate 140 toward the inside of the case 120 (toward the electrode assembly), and a second bent portion 1452 formed by protruding convexly from the cap plate 140 toward the outside of the case 120.

As shown in FIG. 3, the vent portion 145 may be formed by forming a notch 1451a in an original plate of the body of the cap plate 140 in a manufacturing process of component units and then applying a press machining method to form a bent shape such that a notch portion is formed. Accordingly, by applying the press machining method to integrally form the vent structure on the cap plate 140, additional components other than the cap plate 140 may be omitted, thereby improving productivity and decreasing cost.

In an embodiment, the first bent portion 1451 may be recessed toward the inside of the case 120, compared to the central region 141 of the cap plate 140. That is, the first bent portion 1451 may be bent more downward (toward the electrode assembly) than the central region 141.

In an embodiment, the second bent portion 1452 may protrude outward from the case 120, compared to the central region 141. That is, the second bent portion 1452 may protrude more upward than the central region 141. In an embodiment, the second bent portion 1452 may protrude to a same height as or to a lower height than the edge region 142. That is, in the cap plate 140, the second bent portion 1452 may be positioned higher than the central region 141, and the edge region 142 may be positioned higher than or at a same height as the second bent portion 1452.

In an embodiment, heights of the first bent portion 1451 and the second bent portion 1452 of the vent portion 145 may be 1 to 2.5 times the thickness of the cap plate 140. For example, a protruding height of the second bent portion 1452 protruding upward may be 1 to 2.5 times greater than the thickness of the cap plate 140. In an embodiment, for example, a bending depth of the first bent portion 1451 depressed downward may be formed by being depressed to a height of 1 to 2.5 times the thickness of the cap plate 140. When the protruding height of the second bent portion 1452 is more than 1 times greater than the thickness of the cap plate 140, press machining may be performed, and when the protruding height is less than 2.5 times greater than the thickness of the cap plate 140, rigidity may be secured. In addition, when the bending depth of the first bent portion 1451 is 1 or more times the thickness of the cap plate 140, press machining may be performed, and when the bending depth is 2.5 times or less than the thickness of the cap plate 140, damage to internal capacity may be reduced.

In an embodiment, a bending angle of the first bent portion 1451 may be 15 to 25 degrees (°). When the bending angle is greater than or equal to 15 degrees (°), rigidity may be secured, and when the bending angle is less than or equal to 25 degrees (°), a breaking pressure may be kept constant. The bending angle may be measured on the inside of the bend, for example between sidewalls of the notch 1451a thereat.

In an embodiment, the notch 1451a may be provided in the first bent portion 1451, which is an intaglio portion, e.g. a cut portion, of the vent portion 145. That is, the notch 1451a may be formed at a portion where the first bent portion 1451 is bent. The notch 1451a may be broken when the pressure of the gas inside the case 120 exceeds a certain pressure (e.g., a predetermined pressure).

In an embodiment, when gas is generated inside the case 120, a shape of the second bent portion 1452 may be deformed by the resulting pressure, and an angle of the notch 1451a of the first bent portion 1451 may increase. As a result, cracks may occur (see FIG. 4). Accordingly, the notch 1451a may be broken to release gas and pressure, thereby preventing or substantially preventing explosion (see FIG. 5).

The notch 1451a may be formed along or around the circumference of the cap plate 140.

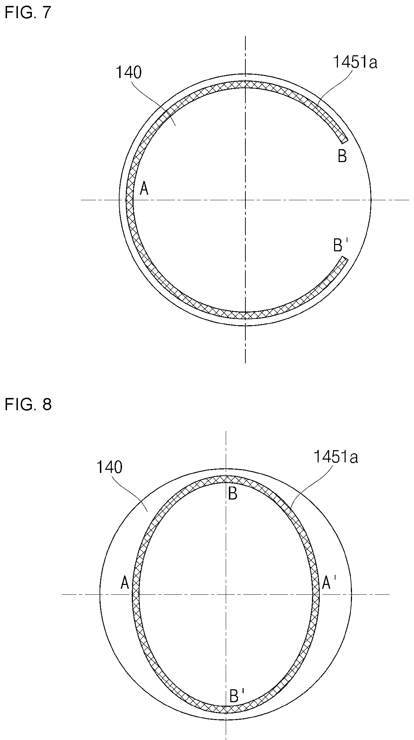

FIG. 6 is a plan view of a cap plate in the cylindrical secondary battery of FIG. 1, according to an embodiment; FIG. 7 is a plan view of a cap plate in the cylindrical secondary battery of FIG. 1 according to another embodiment; and FIG. 8 is a plan view of a cap plate in the cylindrical secondary battery of FIG. 1 according to another embodiment. Herein, a planar shape of the notch 1451a when the cap plate 140 is viewed from above will be described with reference to FIGS. 6 to 8.

As shown in FIG. 6, in some examples, the notch 1451a may be shaped as a circular ring (when viewed in plan view) continuously formed or arranged in the cap plate 140.

In an embodiment, as shown in FIG. 7, the notch 1451a may have a C-shaped shape (when viewed in plan view) in which a side is excluded from a circular ring shape.

In an embodiment, as shown in FIG. 8, the notch 1451a may have an elliptical shape (when viewed in plan view).

When the notch 1451a is asymmetrically formed in such shapes as shown in FIGS. 7 and 8, a partial region of the notch 1451a may be induced to be broken first. For example, in the shape shown in FIG. 7, an opening may open at the notch 1451a along the C-shape, but a breakage may not be made in the region of the cap plate 140 where the notch is not formed.

In addition, when the notch 1451a is formed in an elliptical shape as shown in FIG. 8, breakage may be caused to be first made in regions A and A' where radii of curvature (r values) are relatively large, and, as the internal pressure increases, may then be sequentially made in regions B and B' where radii of curvature are small. This can be due to the inherent stiffness induced by the tighter radius in plan view for the first bent portion 1451 (in which the notch 1451a is located), or due to the form of the notch 1451a.

However, the notch 1451a (and first bent portion) may have a shape other than those stated above, and the shape thereof may be variously changed.

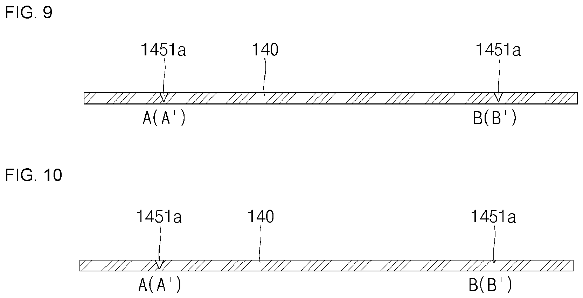

FIG. 9 shows an example of a cross-sectional view of a cap plate after a notch process, for comparison of notch depths between part A (A') and part B (B') in the cylindrical secondary battery of FIGS. 6-8, according to an embodiment; and FIG. 10 shows a cross-sectional view of a cap plate after a notch process, for comparison of notch depths between part A (A') and part B (B') in the cylindrical secondary battery of FIGS. 6-8, according to another embodiment. Herein, the depth of the notch 1451a will be described with reference to FIGS. 9 and 10.

As shown in FIG. 9, in an embodiment, the depth of notch 1451a may be constant. That is, the depth of the notch 1451a may be formed uniformly (uniformly or substantially uniformly) in both portions A (A') and B (B') shown in FIGS. 6 to 8. In an embodiment, a thickness of the cap plate 140 in a region where the notch 1451a is formed may be 0.05 mm to 0.20 mm. In an embodiment, the cell breaking pressure range may be 10 to 40 kgf/cm². When the thickness of the cap plate 140 is 0.05 mm or more in the region where the notch 1451a is formed, it may be easy to process the notch or press the cap plate 140. In addition, when the thickness of the cap plate 140 is 0.20 mm or less in the region where the notch 1451a is formed, the cap plate 140 may be broken at a desired breaking pressure.

As shown in FIG. 10, in another embodiment, the depth of the notch 1451a may be asymmetrical in a tapered form, decreasing from a side to another side. For example, when the notch 1451a is shaped of a circle, the depth thereof may gradually decrease along a circumference from a side A to another side B of the circle. In addition, when the notch 1451a is formed in a C-shape, the depth thereof may gradually decrease from the middle portion A of the C-shape to both ends B and B'.

In addition, when the notch 1451a is shaped of an ellipse, by making the depth gradually decrease from regions A and A' having a large radius of curvature to regions B and B' having a relatively small radius of curvature, breakage may be made to be induced to a large curvature radius region where a probability of breakage is relatively high. In an embodiment, the depth is made to gradually decrease from the region A having a large radius of curvature to the regions B and B' having a relatively small radius of curvature, respectively, and the depth is made to gradually decrease from the region A' having a large radius of curvature to the regions B and B' having a relatively small radius of curvature, respectively.

However, when the notch 1451a is elliptical, a tapered shape may not be applied. For example, by forming a step, the depth of the notch 1451a in regions A and A' having a relatively large radius of curvature is made to be larger than the depth of the notch 1451a in regions B and B' having a relatively small radius of curvature.

In an embodiment, a cap plate thickness at a starting point of breakage, that is, at a portion where the notch has a largest depth, may be 0.05 to 0.10 mm. In an embodiment, a cap plate thickness at the opposite side, that is, at a portion where the notch has a relatively small depth, may be 0.15 to 0.20 mm.

The plug 150 seals the injection port 143 after injecting an electrolyte into the case 120, and, in an embodiment, may be installed by riveting. In an embodiment, the plug 150 may include a shank 151 that is disposed while penetrating the injection port 143, a head portion 152 that is disposed at an end of the shank 151 and is formed to be larger than the injection port 143 to be supported on an outer surface of the cap plate 140, and a tail portion 153 that is supported on the inner surface of the cap plate 140 as the other end of the shank 151 is deformed more than the injection port 143.

In particular, when the plug 150 is installed in the injection port 143, the tail portion 153 may be positioned inside a hollow of the electrode assembly 110. Accordingly, there is no need to provide a separate space for the tail portion 153 inside the case 120, and the secondary battery 100 can be designed more compactly as a whole.

As described above, in the secondary battery according to various embodiments of the present disclosure, when the temperature of a cell increases due to the occurrence of an event, the bent shape of a cap plate may be deformed and broken.

In addition, in the secondary battery according to various embodiments of the present disclosure, after forming a notch in an original plate of the body of a cap plate, a press processing method is applied to form a bent shape such that a notch portion is folded to integrally form a vent structure with the cap plate, thereby improving productivity by eliminating the addition of a separate component other than the cap plate.

In addition, in the secondary battery according to various embodiments of the present disclosure, by forming a notch in an intaglio portion of the bent shape of the cap plate, breakage may be induced when a cell pressure rises, thereby facilitating gas discharge.

In addition, in the secondary battery according to various embodiments of the present disclosure, a cap plate comes into direct contact with an electrode assembly to be welded, thereby eliminating a beading part and a crimping part provided in conventional secondary batteries. Therefore, the space of a case used to form the beading part and the crimping part may be further allocated for the electrode assembly, thereby improving battery capacity. In addition, since the beading part and the crimping part are not formed, a process time may be shortened, and a cost may be reduced.

In addition, in the secondary battery according to various embodiments of the present disclosure, a negative electrode and a positive electrode are both provided on a lower surface, and, thus, when a plurality of secondary batteries are electrically connected through a bus bar, connection thereof is enabled on the lower surface, thereby simplifying a bus bar connection structure.

While some embodiments for carrying out the present disclosure have been described herein, the present disclosure is not limited thereto, and it will be understood by a person skilled in the art that various changes in form and details may be made therein without departing from the scope of the present disclosure as set forth by the following claims.

## Claims

1. A secondary battery comprising:
an electrode assembly;
a case comprising a top end open to accommodate the electrode assembly; and
a cap plate coupled to the top end of the case,
wherein the cap plate comprises a central region, an edge region, a bent portion between the central region and the edge region, and a vent portion comprising a notch configured to be broken by a certain pressure.

2. The secondary battery as claimed in claim 1, wherein the vent portion comprises:
a first bent portion concavely recessed from the cap plate toward an inside of the case; and
a second bent portion convexly protruding from the cap plate toward an outside of the case, and optionally wherein the notch is located at a bent portion of the first bent portion.

3. The secondary battery as claimed in claim 2, wherein the notch is located on an outer surface of the cap plate.

4. The secondary battery as claimed in claim 2, or any one of the preceding claims, wherein a thickness of the cap plate at a portion where the notch is formed is 0.05 mm to 0.20 mm.

5. The secondary battery as claimed in claim 2, or any one of the preceding claims, wherein the notch is shaped as a circular ring continuously arranged along a circumference of the cap plate.

6. The secondary battery as claimed in claim 2 or any one of claims 1 to 4, wherein the notch is shaped as a C-shape.

7. The secondary battery as claimed in claim 2 or any one of claims 1 to 4, wherein the notch is shaped as an ellipse continuously arranged along a circumference of the cap plate.

8. The secondary battery as claimed in claim 7, wherein a depth of the notch in a region having a relatively small radius of curvature of the ellipse is smaller than a depth of the notch in a region having a relatively large radius of curvature of the ellipse.

9. The secondary battery as claimed in claim 2 or any one of claims 1 to 7, wherein the notch is formed to a certain depth.

10. The secondary battery as claimed in claim 2 or any one of claims 1 to 8, wherein a depth of the notch is asymmetrical in a tapered form, decreasing from a first side to a second side, and optionally wherein the cap plate has a thickness of 0.05 to 0.10 mm at a portion where the notch has a largest depth, and has a thickness of 0.15 to 0.20 mm at a portion where the notch has a smallest depth.

11. The secondary battery as claimed in claim 2, or any one of the preceding claims, wherein the first bent portion is recessed toward the inside of the case, compared to the central region and the edge region of the cap plate.

12. The secondary battery as claimed in any one of the preceding claims, when dependent upon claim 2, wherein the second bent portion protrudes outward from the case, compared to the central region of the cap plate, and optionally wherein a height of the second bent portion protruding outward from the case is equal to or smaller than a height of the edge region of the cap plate.

13. The secondary battery as claimed in any one of the preceding claims, when dependent upon claim 2, wherein the height at which the second bent portion protrudes or the first bent portion is recessed is 1 to 2.5 times greater than a thickness of the cap plate.

14. The secondary battery as claimed in any one of the preceding claims, when dependent upon claim 2, wherein the first bent portion has a bending angle of 15 to 25 degrees.

15. The secondary battery as claimed in any one of the preceding claims, wherein the secondary battery is a cylindrical secondary battery.
